# FASCICULE DE BREVET EUROPEEN

(11) **EP 1 381 800 B1**
(45) Date de publication et mention de la délivrance du brevet: **22.11.2006**
(21) Numéro de dépôt: 02726270.8
(22) Date de dépôt: 22.04.2002
(51) Int. Cl.: F16J 15/08

(54) **JOINT D'ETANCHEITE METALLIQUE ELASTIQUE OUVERT A PARTIES SAILLANTES DESAXEES**
OFFENE, ELASTISCHE METALLDICHTUNG MIT VERSETZTEN, HERVORSTEHENDEN TEILEN
OPEN METAL GASKET WITH OFFSET PROJECTING PORTIONS

(30) Priorité: 23.04.2001 FR 0105426
(43) Date de publication de la demande: 21.01.2004
(73) Titulaire: COMMISSARIAT A L'ENERGIE ATOMIQUE, 75015 Paris (FR); Garlock France SAS, 42029 Saint Etienne Cédex (FR)
(72) Inventeur: CAPLAIN, Philippe, F-26130 Saint-Paul Trois Chateaux (FR); MIRABEL, Laurent, F-26700 Pierrelatte (FR); ROUAUD, Christian, F-07700 Bourg Saint-Andeol (FR)
(74) Mandataire: Poulin, Gérard
(86) Numéro de dépôt international: PCT/FR2002/001374
(87) Numéro de publication internationale: WO 2002/086359

(56) Documents cités:
- WO-A-00/57089
- FR-A- 2 636 115
- US-A- 5 797 604

## Description

### Domaine de l'invention

L'invention se rapporte au domaine de l'étanchéité statique, et en particulier au joint métallique élastique devant assurer une étanchéité à des forces de serrage inférieures à celles nécessaires à l'efficacité d'un joint dont l'âme est un ressort.

### Art antérieur et problème posé

Compte tenu du choix de leurs matériaux vis-à-vis de leur insensibilité au fluide corrosif, de leur bon comportement à haute et basse températures et de leur bonne tenue dans le temps, les joints d'étanchéité métallique sont utilisés dans des domaines d'application très divers, parmi lesquels on peut citer, de façon nullement limitative, les industries chimique, pétrolière et nucléaire, ainsi que les secteurs automobile et spatial. La qualité de l'étanchéité procurée par un joint d'étanchéité dépend notamment de la pression spécifique développée entre les surfaces de contact du joint et des brides de l'assemblage dans lequel le joint est placé. Au cours du serrage initial de l'assemblage, la pression spécifique doit être suffisante pour permettre l'adaptation du joint aux aspérités des surfaces des brides. Il est donc clair que la pression spécifique de serrage doit être relativement élevée, en tout cas supérieure à la pression du fluide régnant à l'intérieur du volume délimité par le joint et les surfaces des brides de serrage.

Par ailleurs, dans de nombreuses applications, l'effort de serrage doit rester faible. Ceci est notamment le cas lorsque l'assemblage est peu accessible et rend difficile la manipulation des outils de serrage, comme dans l'industrie nucléaire et l'industrie du semi-conducteur et lorsque les assemblages en matériau à hautes caractéristiques doivent être allégés et ne supportent pas des efforts élevés, comme dans les industries aéronautique et spatiale. Pour obtenir un tel résultat, on a mis au point des joints toriques métalliques utilisant comme élément élastique un tube ouvert, de préférence enveloppé d'une fine couche de matériau ductile. Chaque surface de contact possède une partie saillante dans l'axe de la section du joint torique normale aux surfaces des brides de serrage. Ceci permet de diminuer d'un facteur 2 les efforts de serrage sur ce type de joint. On peut citer, à cet effet, le brevet US-3 188 100. Le principe et les désavantages du fonctionnement du joint décrit dans le brevet US-3 188 100 sont explicités en regard des figures 1 et 2.

En référence à la figure 1, montrant en coupe le joint décrit dans ce brevet américain, on constate que celui-ci est de forme annulaire, sa section étant de révolution. Par contre, cette dernière est ouverte par une ouverture 2 placée sur l'intérieur du joint. Il est constitué de deux parties qui sont principalement une âme métallique 3, autour de laquelle est placée une couche externe 4 plus molle. L'ensemble est usiné sur les parties devant entrer en contact avec les pièces à étancher, de façon à former deux parties saillantes 5 faisant saillies par rapport à une surface plane 6, de chaque côté du joint. Ces deux parties en saillies 5 sont donc destinées à venir entrer en contact avec les deux surfaces, que doit contacter le joint, et être écrasées partiellement contre elles.

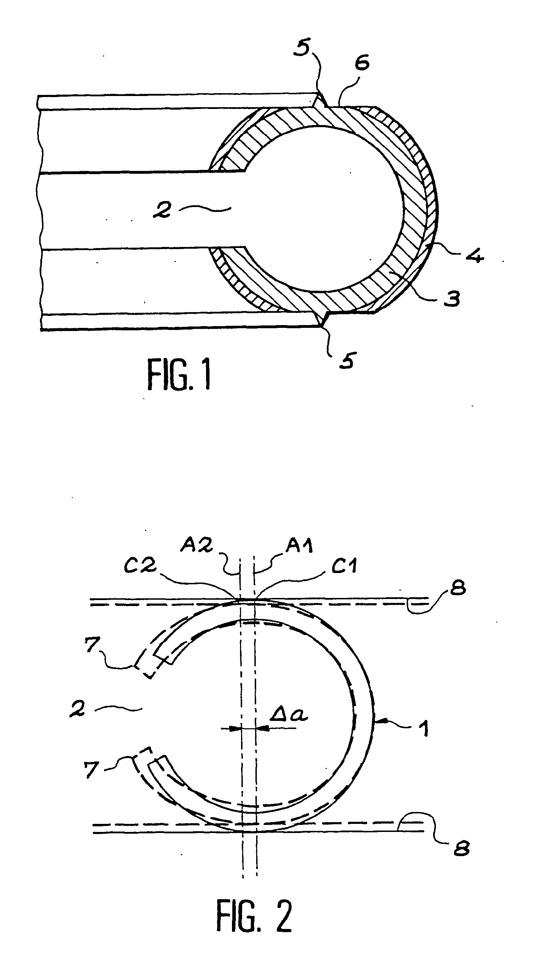

Le choix d'une structure générale en tube ouvert ne permet pas de satisfaire simultanément à une faible raideur de l'ensemble et à une haute étanchéité, malgré la présence des parties saillantes 5. En effet, la structure en tube ouvert conduit à une déformation asymétrique de la section du joint, au cours de son écrasement et, par conséquent, à une dégradation de l'étanchéité engendrée par un déplacement des parties saillantes 5, comme le montre la figure 2.

Sur cette dernière, les points C1 et C2 indiquent les deux places d'une partie saillante respectivement avant et après l'écrasement. En effet, le joint 1 a été représenté en contact avec deux surfaces qui délimitent deux espaces devant être étanchés et qui se rapprochent, lors de l'écrasement. Un déplacement Δa de l'emplacement C1 par rapport à l'emplacement C2 du point de contact a lieu. On peut même constater que, lors de l'écrasement du joint 1, les extrémités, 7 de la structure ouverte que constitue le joint 1 se rapprochent légèrement et se décalent vers l'extérieur. En d'autres termes, si le positionnement initial des parties saillantes, référencées 5 sur la figure 1, se trouve au milieu de la structure géométrique du joint, comme le point C1 sur la figure 2, le point, C2 représentant le positionnement des parties saillantes, après l'écrasement du joint 1, ne se trouve plus au milieu de celle-ci, mais désaxé. Ce déplacement de cet axe de la section du joint est donc préjudiciable à l'obtention de l'étanchéité recherchée. Dans un tel joint, le meilleur niveau d'étanchéité est obtenu au cours de l'écrasement et non en fin d'écrasement, comme cela est recherché par les utilisateurs. On peut même assister à une dégradation de l'étanchéité au cours de l'écrasement.

Les brevets français FR-2 557 662 et FR-2 636 115 décrivent chacun un type de joint métallique torique dont l'âme est constituée d'un ressort hélicoïdal et possédant deux parties saillantes usinées sur l'enveloppe externe. Or, le choix d'un ressort hélicoïdal pour constituer l'âme centrale du joint ne permet pas de diminuer l'effort de serrage en deçà d'un certain seuil, car il y a un risque très élevé de basculement des spires du ressort et, par voie de conséquence, une réaction aléatoire du ressort sur la portée d'étanchéité.

Le but de l'invention est donc de remédier à ces inconvénients, en proposant un autre type de joint métallique élastique à parties saillantes.

### Résumé de l'invention

A cet effet, l'objet principal de l'invention est un joint d'étanchéité métallique et élastique ouvert comprenant une âme métallique élastique et une enveloppe métallique externe dans laquelle est encastrée l'âme métallique élastique et présentant, lorsque le joint est au repos, une section de type circulaire ouverte, définissant un axe médian, c'est-à-dire une droite passant par le centre géométrique de la section au repos, l'ouverture de la structure générale du joint se trouvant entre deux surfaces de dégagement opposées qui possèdent chacune une partie saillante, dont le sommet est destiné à venir en contact étanche avec un objet, sous l'effet d'un effort de serrage déterminé.

Selon l'invention, au repos, les parties saillantes sont légèrement décalées par rapport à l'axe médian, du côté opposé à l'ouverture, de façon à se rapprocher de cet axe médian, sous l'effet de l'effort de serrage.

De préférence, les parties saillantes sont symétriques par rapport au plan moyen du joint.

Dans la réalisation préférentielle du joint selon l'invention, les deux surfaces de dégagement sont chacune perpendiculaire à un axe de symétrie de la partie saillante qui leur est associée et dont l'axe de symétrie passe par le centre du cercle défini par la section circulaire du joint.

Dans ce cas, lorsque le joint est au repos, chaque surface de dégagement possède une partie saillante dont l'axe de symétrie est incliné d'un angle α déterminé compris entre 1° et 12°, cet angle d'inclinaison α ayant tendance à disparaître sous l'effet de l'effort de serrage.

Dans un grand nombre de réalisations du joint selon l'invention, celui-ci est de forme générale annulaire. Dans ce cas, l'ouverture peut être positionnée vers l'axe de symétrie du joint ou à l'opposé de celui-ci.

Le joint peut également être de différentes formes, par exemple de forme elliptique, de forme triangulaire ou de forme rectangulaire.

Les parties saillantes peuvent être de plusieurs formes, par exemple de forme généralement triangulaire, de forme généralement trapézoïdale, de forme généralement elliptique, ou de forme généralement rectangulaire.

De préférence, la hauteur des parties saillantes, de section approximativement triangulaire, est comprise entre 0,05 et 0,50 mm.

### Liste des figures

L'invention et ses différentes caractéristiques seront mieux décrites à la lecture de la description suivante, accompagnée de plusieurs figures représentant respectivement :
- figure 1, un joint métallique selon l'art antérieur ;
- figure 2, le comportement du joint métallique de l'art antérieur en fonctionnement ;
- figure 3, le principe de fonctionnement du joint métallique élastique selon l'invention ;
- figure 4, le joint métallique élastique selon l'invention ;
- figures 5 et 6, deux courbes relatives au bon fonctionnement du joint métallique élastique selon l'invention ;
- figures 7 à 10, différentes formes que peut avoir le joint ; et
- figures 11 à 14, différentes formes que peuvent avoir les parties saillantes.

### Description détaillée d'un mode de réalisation de l'invention

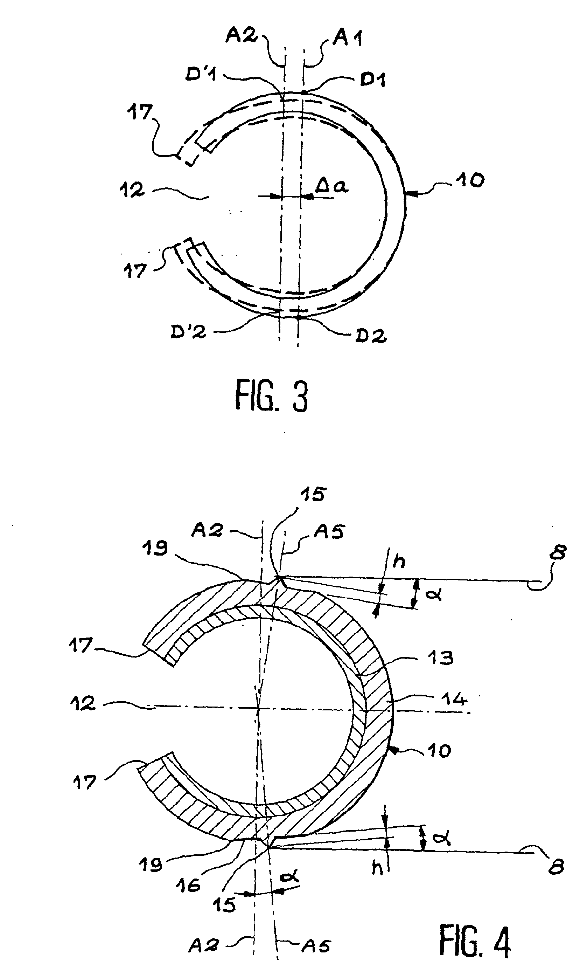

En référence à la figure 3, le fonctionnement du joint selon l'invention est basé sur un principe similaire à celui du joint de l'art antérieur, évoqué dans le document américain, avec toutefois une nuance prépondérante qui est la suivante.

Le joint 10 possède une structure cylindrique ouverte avec une ouverture 12. Il possède, sur chaque surface de dégagement 16, une partie saillante devant entrer en contact avec les objets à étancher l'un par rapport à l'autre. Or, cette partie saillante 15 est placée à un emplacement, référencé D1 ou D2, sur un axe A1, de façon légèrement déportée par rapport à un axe A2 médian du joint 10 avant écrasement, qui passe par le centre géométrique de la section du joint 10. En d'autres termes, il existe une petite distance Δa entre l'axe A1 passant par les deux points D1 et D2, schématisant chacun une partie saillante et l'axe médian A2 du joint 10 avant écrasement.

De cette sorte, la figure montrant les positions avant et après l'écrasement, on s'aperçoit que le joint 10 se déporte légèrement vers l'extérieur par rapport à l'axe médian A2 du joint, comme le schématise le changement de position des extrémités 17 du joint 10 en regard de l'ouverture 12. En d'autres termes, en fin d'écrasement, l'axe de symétrie de chaque partie saillante doit se trouver à l'endroit D'1 ou D'2 au contact étanche vis-à-vis des parties 8, sur ou très près de l'axe médian A2 du joint 10. En conséquence, il convient donc de prévoir la position, au repos, des parties saillantes, déportée de l'axe médian A2, comme le symbolisent les emplacements D1 et D2. Quelle que soit la position de l'ouverture 12, les parties saillantes 15 sont placées du côté opposé à cette ouverture.

La figure 4 montre en détail une réalisation préférentielle du joint selon l'invention. Il comprend une âme métallique 13 réalisée le plus souvent en matériau possédant une haute limite élastique, tel que l'acier inoxydable écroui, le cuprobéryllium, les alliages de nickel ou de titane. Autour de cette âme métallique 13, se trouve l'enveloppe externe 14 prévue dans un matériau très ductile, tel que l'aluminium, l'argent, l'or ou le cuivre ou un autre matériau de ductilité équivalente, ou moins ductile, tel que le nickel ou l'acier inoxydable.

Deux surfaces de dégagement 16 sont prévues de manière quasi diamétralement opposée et sont planes. Toutefois, elles ne sont pas parallèles, puisqu'elles sont inclinées toutes les deux vers un même côté d'un même angle d'inclinaison α. Dans une zone médiane, de préférence au milieu de chaque surface de dégagement 16 est prévue une partie saillante 15 de section approximativement triangulaire. L'axe de symétrie A5 de chaque partie saillante 15 se trouve donc incliné d'un même angle d'inclinaison α par rapport à l'axe médian A2 et passe par le centre géométrique de la section du joint 10.

Du fait de cette inclinaison des surfaces de dégagement 16, celles-ci peuvent avoir chacune une extrémité 19 en contact avec une des pièces 8 par rapport auxquelles l'étanchéité doit être assurée. Ainsi, en choisissant une hauteur h des parties saillantes 15, un angle α d'inclinaison des surfaces de dégagement 16 et une longueur de ces surfaces de dégagement 16, il est possible d'obtenir, lorsque le joint est placé avant écrasement, un double contact entre celui-ci et les pièces 8. En effet, on peut envisager que ces pièces 8 dont les surfaces sont parallèles puissent être chacune en contact à la fois avec les sommets d'une partie saillante 15 et une extrémité 19 de la surface de dégagement 16 correspondante au début de l'écrasement, mais ce double contact n'est pas préjudiciable au bon fonctionnement en fin d'écrasement.

A titre d'exemple, l'angle d'inclinaison α doit être faible et peut varier entre 1 et 15°. Le choix de sa valeur exacte est dicté par la double exigence d'obtenir un niveau d'étanchéité optimal en fin de serrage et de maintenir ce même niveau d'étanchéité pour un seuil d'effort le plus faible possible en phase de décompression.

Pour une enveloppe en aluminium d'épaisseur de 0,5 mm et pour un diamètre extérieur de 4,2 mm, on peut envisager un angle d'inclinaison α de l'ordre de 8°, ce qui conduit à un décalage des axes A1 et A2 de la figure 3, de l'ordre de 0,30 mm pour une hauteur h de 0,1 mm.

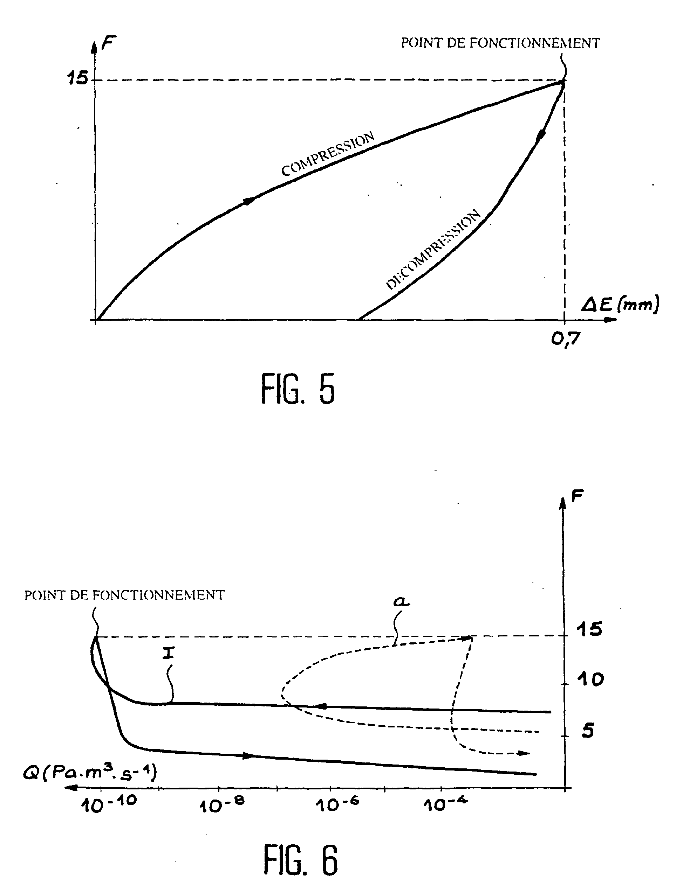

La figure 5 représente une courbe caractéristique de l'effort linéique de serrage F, en fonction de l'écrasement E applicable aux joints de l'art antérieur, comme aux joints selon l'invention.

La figure 6 est représentative de l'évolution de la valeur de fuite Q au cours du cycle d'écrasement, en fonction de la force d'écrasement. Sur cette figure 6, on a comparé les performances du joint selon l'invention (courbe I, en traits pleins) par rapport aux performances d'un joint selon l'art antérieur, ne possédant pas de désaxage des parties saillantes (courbe (a), en traits interrompus).

On constate que le joint selon l'art antérieur obtient plus rapidement une meilleure étanchéité au début de l'écrasement. Par contre, cette étanchéité se dégrade ensuite, en particulier lorsqu'on atteint 0,7 mm d'écrasement, pour un exemple considéré. De plus, le joint selon l'invention, pour lequel l'angle d'inclinaison α est égal à 8°, présente une amélioration constante de l'étanchéité dans la phase de compression et une très étanchéité en fin d'écrasement pour la même valeur de 0,7 mm d'écrasement. Cette très bonne étanchéité varie très peu en décompression, jusqu'à un seuil d'effort linéique de 4 à 5 newtons par millimètre de circonférence moyenne du joint.

Dans un grand nombre de réalisations du joint selon l'invention, celui-ci est de forme générale annulaire.

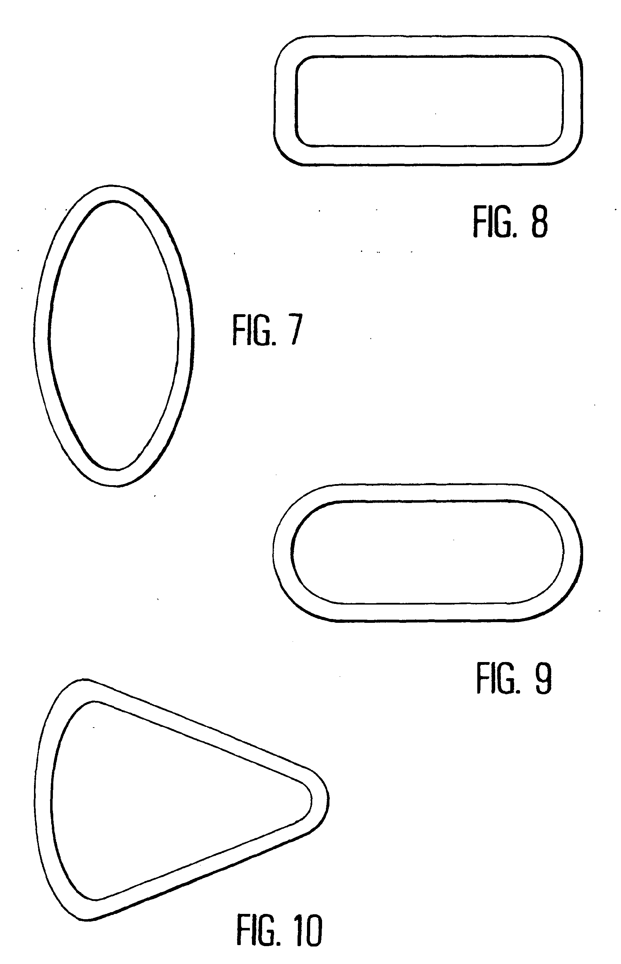

Dans d'autres réalisations du joint selon l'invention, celui-ci peut être elliptique (figure 7), rectangulaire, généralement rectangulaire avec des coins arrondis (figure 8), triangulaire, oblongue (figure 9) ou d'une des autres formes 7 résultant d'une combinaison et/ou d'une modification de ces formes (figure 10) .

Dans le cas représenté, la hauteur des parties saillantes, de section approximativement triangulaire, est comprise entre 0,05 et 0,50 mm.

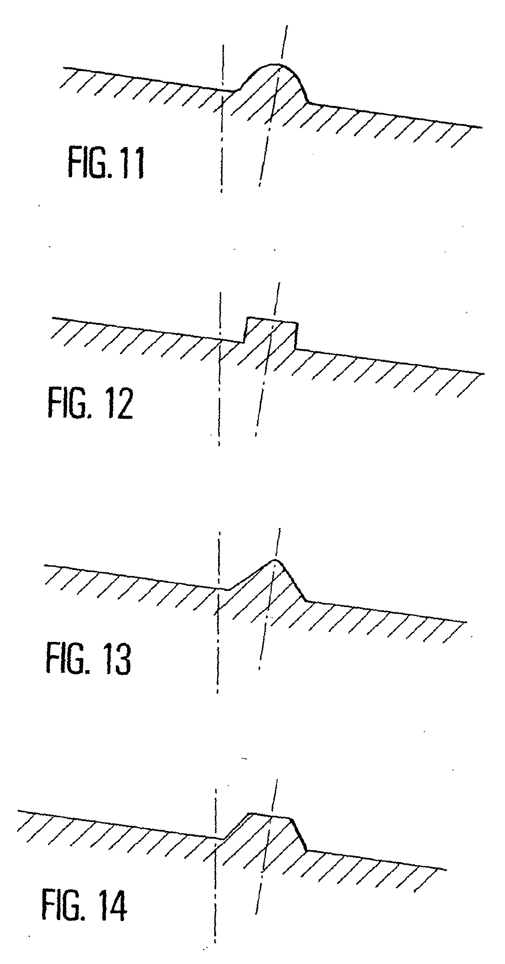

Pour une section approximativement triangulaire, la hauteur est mesurée perpendiculairement à la surface 16, à partir du sommet de la partie saillante jusqu'à ladite surface. Dans d'autres réalisations du joint selon l'invention, la partie saillante peut être elliptique (figure 11), rectangulaire, généralement rectangulaire avec des coins arrondis (figure 12), triangulaire (figure 13), trapézoïdale (figure 14), ou d'une des autres formes 8. Pour une section approximativement trapézoïdale, arrondie ou d'une autre forme, la hauteur est mesurée perpendiculairement à la surface 16 à partir du sommet de la partie saillante jusqu'à ladite surface.

## Revendications

1. Joint d'étanchéité métallique élastique ouvert (10) comprenant une âme métallique élastique et une enveloppe métallique externe (14), dans laquelle est encastrée l'âme métallique, le joint (10) présentant, lorsqu'il est en repos, une section de forme circulaire ouverte définissant un axe médian (A2), c'est-à-dire une droite passant par le centre géométrique de la section du joint au repos, l'ouverture (12) se trouvant entre deux surfaces de dégagement (16) qui sont opposées et qui possèdent chacune une partie saillante (15) dont le sommet est destiné à venir en contact étanche avec un objet (8) sous l'effet d'un effort de serrage déterminé, **caractérisé en ce que**, au repos, les parties saillantes (15) sont légèrement décalées par rapport à l'axe médian (A2) du côté opposé à l'ouverture, de façon à se rapprocher de cet axe médian (A2), sous l'effet de l'effort de serrage.

2. Joint selon la revendication 1, **caractérisé en ce que** les parties saillantes (15) sont symétriques par rapport au plan de symétrie du joint (10).

3. Joint selon la revendication 1, **caractérisé en ce que** les deux surfaces de dégagement (16) sont chacune perpendiculaire à l'axe de symétrie (A5) de la partie saillante (15) qui leur est associé.

4. Joint selon la revendication 3, **caractérisé en ce que** l'axe de symétrie (A5) passe par le centre du cercle défini par la section du joint (10).

5. Joint selon la revendication 4, **caractérisé en ce que** chaque surface de dégagement (16) possédant en son milieu une partie saillante dont l'axe de symétrie (A5) est incliné d'un angle α d'inclinaison déterminé compris entre 1 et 12°, cet angle déterminé d'inclinaison α ayant tendance à disparaître sous l'effet de l'effort de serrage.

6. Joint selon la revendication 1, **caractérisé en ce qu'**il est de forme annulaire.

7. Joint selon la revendication 1, **caractérisé en ce que** la hauteur (h) des parties saillantes (15), qui sont de section approximativement triangulaire, est comprise entre 0,05 mm et 0,50 mm.

8. Joint selon la revendication 1, **caractérisé en ce que** les parties saillantes (15) sont de forme généralement triangulaire.

9. Joint selon la revendication 1, **caractérisé en ce que** les parties saillantes (15) sont de forme généralement trapézoïdale.

10. Joint selon la revendication 1, **caractérisé en ce que** les parties saillantes (15) sont de forme généralement elliptique.

11. Joint selon la revendication 1, **caractérisé en ce que** les parties saillantes sont de forme généralement rectangulaire.

12. Joint selon la revendication 1, **caractérisé en ce qu'**il est de forme générale annulaire.

13. Joint selon la revendication 12, **caractérisé en ce qu'**il est de forme elliptique.

14. Joint selon la revendication 12, **caractérisé en ce qu'**il est de forme triangulaire.

15. Joint selon la revendication 12, **caractérisé en ce qu'**il est de forme rectangulaire.

16. Joint selon la revendication 12, **caractérisé en ce que** l'ouverture (12) est positionnée vers l'axe de symétrie du joint ou à l'opposé de celui-ci.

## Claims

1. Elastic metal gasket (10) comprising an elastic metal core and external metal sheath (14), in which the metal core is encased, the gasket (10) presenting, when idle, an open circular section defining a center line (A2), that is a straight line passing through the geometric center of the section of the idle gasket, the opening (12) being found between two opposing contact surfaces (16) each having a projecting part (15) whose summit is designed to come into leaktight contact with an object (8) under a determined preload,
**characterized** such that when idle the projecting parts (15) are slightly offset on the same side with respect to the center line (A2), such that they come closer to this center line under the effect of preload.

2. Gasket according to claim 1, **characterized** such that the projecting parts (15) are equidistant from the opening (12).

3. Gasket according to claim 1, **characterized** such that the two contact surfaces (16) are each perpendicular to the axis of symmetry (A5) of the projecting part (15) related to them.

4. Gasket according to claim 3, **characterized** such that the axis of symmetry (A5) passes through the center of the circle defined by the section of the gasket (10).

5. Gasket according to claim 4, **characterized** such that the summit of each projecting part (15), which is triangular in shape, and the extremity (19) of the contact surface (16) found closest to the opening (12), define a sealing surface, each contact surface (16) is inclined by an angle α of inclination determined with respect to the sealing surface, α falling between 1 and 12°, this determined angle of inclination α tending to disappear under the effect of preload.

6. Gasket according to claim 1, **characterized** such that it is ring-shaped.

7. Gasket according to claim 1, **characterized** such that the height (h) of the projecting parts (15) falls between 0.05 mm and 0.50 mm.

8. Gasket according to claim 1, **characterized** such that the projecting part is generally triangular in shape.

9. Gasket according to claim 1, **characterized** such that the projecting part is generally trapezoidal in shape.

10. Gasket according to claim 1, **characterized** such that the projecting part is generally elliptical in shape.

11. Gasket according to claim 1, **characterized** such that the projecting part is generally rectangular in shape.

12. Gasket according to claim 1, **characterised in that** it is generally ring-shaped.

13. Gasket according to claim 1, **characterized** such that it is ellipse-shaped.

14. Gasket according to claim 1, **characterized** such that it is triangle-shaped.

15. Gasket according to claim 1, **characterized** such that it is rectangle-shaped.

16. Gasket according to claim 1, **characterised in that** the opening (12) is positioned towards the axis of symmetry of the joint or opposite the latter.

## Patentansprüche

1. Offene elastische Metalldichtung (10) mit einem elastischen Metallkern und einer metallischen Außenhülle (14), in die der Metallkern eingefügt ist, wobei die Dichtung (10), wenn sie sich im Ruhezustand befindet, einen offenen kreisförmigen Querschnitt aufweist, der eine Mittelachse (A2) definiert, das heißt eine Gerade, die durch den geometrischen Mittelpunkt des Querschnitts der sich im Ruhezustand befindlichen Dichtung verläuft, wobei die Öffnung (12) sich zwischen zwei Freiheitsflächen (16) befindet, die sich gegenüberstehen und von denen jede einen hervorstehenden Teil (15) aufweist, dessen Spitze dazu bestimmt ist, unter der Wirkung einer bestimmten Spannkraft einen dichten Kontakt mit einem Gegenstand (8) herzustellen,
**dadurch gekennzeichnet, dass** im Ruhezustand die hervorstehenden Teile leicht versetzt sind in Bezug auf die Mittelachse (A2), entgegengesetzt zu der Öffnung (12), so dass sie sich unter der Wirkung der Spannkraft dieser Mittelachse (A2) nähern.

2. Dichtung nach Anspruch 1, **dadurch gekennzeichnet, dass** die hervorstehenden Teile (15) symmetrisch sind in Bezug auf die Symmetrieebene der Dichtung (10).

3. Dichtung nach Anspruch 1, **dadurch gekennzeichnet, dass** jede der beiden Freiheitsflächen (16) senkrecht ist zu der Symmetrieachse (A5) des mit ihr verbundenen hervorstehenden Teils (15).

4. Dichtung nach Anspruch 3, **dadurch gekennzeichnet, dass** die Symmetrieachse (A5) durch den Mittelpunkt des Kreises verläuft, der durch den Querschnitt der Dichtung (10) definiert wird.

5. Dichtung nach Anspruch 4, **dadurch gekennzeichnet, dass** jede Freiheitsfläche (16) in ihrer Mitte einen hervorstehenden Teil aufweist, dessen Symmetrieachse (A5) um einen zwischen 1 und 12° enthaltenen Neigungswinkel α geneigt ist, wobei dieser festgelegte Neigungswinkel α die Tendenz hat, unter der Wirkung der Spannkraft zu schwinden.

6. Dichtung nach Anspruch 1, **dadurch gekennzeichnet, dass** sie ringförmig ist.

7. Dichtung nach Anspruch 1, **dadurch gekennzeichnet, dass** die Höhe (h) der hervorstehenden Teile (15), die einen annähernd dreieckigen Querschnitt haben, zwischen 0,05 mm und 0,50 mm enthalten ist.

8. Dichtung nach Anspruch 1, **dadurch gekennzeichnet, dass** die hervorstehenden Teile (15) generell von dreieckiger Form sind.

9. Dichtung nach Anspruch 1, **dadurch gekennzeichnet, dass** die hervorstehenden Teile (15) generell trapezförmig sind.

10. Dichtung nach Anspruch 1, **dadurch gekennzeichnet, dass** die hervorstehenden Teile (15) generell von elliptischer Form sind.

11. Dichtung nach Anspruch 1, **dadurch gekennzeichnet, dass** die hervorstehenden Teile generell von rechteckiger Form sind.

12. Dichtung nach Anspruch 1, **dadurch gekennzeichnet, dass** sie generell kreisförmig ist.

13. Dichtung nach Anspruch 12, **dadurch gekennzeichnet, dass** sie generell von elliptischer Form ist.

14. Dichtung nach Anspruch 12, **dadurch gekennzeichnet, dass** sie generell von dreieckiger Form ist.

15. Dichtung nach Anspruch 12, **dadurch gekennzeichnet, dass** sie generell von rechteckiger Form ist.

16. Dichtung nach Anspruch 12, **dadurch gekennzeichnet, dass** die Öffnung (12) in Richtung Symmetrieachse bzw. nach der Symmetrieachse der Dichtung oder entgegengesetzt zu dieser positioniert ist bzw. wird.
